(19)
Europäisches Patentamt
European Patent Office
Office européen des brevets

(11) Veröffentlichungsnummer : **0 216 947 B1**

(12) **EUROPÄISCHE PATENTSCHRIFT**

(45) Veröffentlichungstag der Patentschrift : **02.01.91 Patentblatt 91/01**

(51) Int. Cl.⁵ : **G06K 19/08,** B42D 15/02

(21) Anmeldenummer : **85112432.1**

(22) Anmeldetag : **01.10.85**

# (54) Kartenförmiger Datenträger und Verfahren zu seiner Herstellung.

(43) Veröffentlichungstag der Anmeldung : **08.04.87 Patentblatt 87/15**

(45) Bekanntmachung des Hinweises auf die Patenterteilung : **02.01.91 Patentblatt 91/01**

(84) Benannte Vertragsstaaten : **AT BE CH DE FR GB IT LI LU NL SE**

(56) Entgegenhaltungen :
**DE-B- 3 248 784**
**FR-A- 2 450 164**
**FR-A- 2 496 938**
**FR-A- 2 525 007**
**GB-A- 2 132 136**

(73) Patentinhaber : **MAURER ELECTRONICS GMBH**
**Nymphenburger Strasse 154**
**D-8000 München 19 (DE)**

(72) Erfinder : **Maurer, Thomas**
**Apolloweg 12**
**D-8000 München 60 (DE)**

(74) Vertreter : **TER MEER - MÜLLER - STEINMEISTER & PARTNER**
**Mauerkircherstrasse 45**
**D-8000 München 80 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Gegenstand der Erfindung ist ein kartenförmiger, ein Relief tragender Datenträger gemäß oberbergriff des Haupsanspruches 1, sowie ein Verfahren zu seiner Herstellung

Datenträger für visuell lesbare Daten, wie sie beispielsweise für Kreditkarten, Ausweiskarten und dergleichen Anwendung finden, werden zum Schutz der aufgebrachten Daten mit einer transparenten Deckfolie, wie einer Klarsichtfolie aus beispielsweise Polyvinylchlorid oder Polyester, versehen. Diese transparente Deckfolie verhindert zum einen, daß die auf dem Datenträger aufgezeichneten Daten (Text, Bilder, Logos, Muster, Hoheitszeichen und dergleichen) durch Verschmutzen oder Abrieb beim normalen Gebrauch unleserlich bzw. unkenntlich werden, und zum anderen, daß die Daten in einfacher Weise und mit geringem Aufwand verändert oder verfälscht werden können. Gerade bei den heute gerne verwendeten kartenförmigen Datenträgern, wie Ausweiskarten, Kreditkarten, Scheckkarten und dergleichen, besteht das grundlegende Bedürfnis, diese gegen Verfälschung, Vervielfältigung und/oder Totalfälschung in größtmöglichem Maße zu schützen. Dabei soll der Versuch der Fälschung sicher und ohne aufwendige Prüfmethoden und möglichst ohne zusätzliche Prüfmittel oder Geräte festgestellt werden können.

Zur Erschwerung bzw. Verhinderung von Fälschungen kann der Informationsträger durch verschiedene Maßnahmen unter Anwendung aus dem Wertpapier- oder Banknotendruck bekannten Techniken abgesichert werden, beispielsweise die Form einer papierlaminierten Ausweiskarte, deren Karteninlett aus einem Wasserzeichenpapier besteht, welches gegebenenfalls mit sogenannten Guillochen in mehreren Farben bedruckt ist, wie es beispielsweise für die Scheckkarten bekannt ist. Diese Sicherheits- oder Echtheitsmerkmale, wie der Guillochendruck bei Banknoten, lassen sich nur mit aufwendigen Verfahren herstellen und können daher nur sehr schwer nachgeahmt werden, was diesbezügliche Versuche allerdings nicht ausschließt. Darüberhinaus besteht die Möglichkeit der Entfernung der Deckfolie, wodurch eine Veränderung der Daten möglich wird.

In der DE-B-3 248 748 wird eine Ausweiskarte mit alphanumerischen Zeichen, die als Druckstock verwendbar in hochgeprägter Form vorliegen, beschrieben. Diese Ausweiskarte wird mit kartenrückseite, Mittelschicht und Deckfolie insgesamt geprägt, so daß eine gemeinsame Verformung dieser drei Schichten erreicht wird, was dazu führt, daß die oben liegende Deckfolie unter weitgehender Parallelität der Oberseite und der Unterseite verformt wird.

Gemäß der GB-A-2 132 136, worin ebenfalls eine Ausweiskarte beschrieben wird, befindet sich ebenfalls eine Deckfolie auf dem Substrat. Jedoch ergibt die leicht wellige Darstellung der Oberfläche des Substrats lediglich eine vergrößerte Darstellung der durch die Laserbeschriftung erzeugten Muster.

So ist auch aus der FR-A-2 450 164 eine Ausweiskarte mit einer lichtempfindlichen Schicht und einer darüberliegenden transparenten Deckschicht bekannt. Hier erfüllt die transparente Deckfolie ebenfalls die Funktion, die dargestellten Wiedergaben des Sicherheitsaufdruckes zu vergrößern.

Schließlich ist aus der DE-PS 29 070 004 eine Weiterentwicklung in Form einer Ausweiskarte bekannt, die aus zwei Deckfolien, von denen wenigstens eine transparent ist, und einem karteninlett aus einem lichtundurcklässigen Material, insbesondere Papier, besteht, welches mit visuell erkennbaren Informationen versehen ist, die mit Hilfe eines Laserstrahls durch die transparente Deckfolie hindurch auf das Inlett aufgebracht worden sind. Durch die Anwendung des Laserstrahls wird das unter der transparenten Deckfolie liegende Substrat geschwärzt, wobei durch die teilweise und den aufgezeichneten Informationen entsprechende Zerstörung des Substratmaterials die Möglichkeit der Verfälschung durch Ablösen der Deckfolie weitgehend vermieden werden kann.

Auch hier lassen sich allerdings Verfälschungen oder Fälschungen nicht ausschließen. Zur weiteren Verbesserung der Verfälschungssicherheit wird in diesem Stand der Technik weiterhin angegeben, daß in Abhängigkeit von der Energiedosierung des für das Aufzeichnen der Informationen angewandten Laserstrahls die obere Deckfolie mitaufgeschmolzen werden kann, so daß sich über dem Linienzug der Information ein deckungsgleiches Relief bildet, welches manuell abgefühlt werden kann.

Auch in dieser Weise hergestellte Ausweiskarten mit flächenhaften Informationen, beispielsweise in Form eines Fotos, lassen sich dennnoch verfälschen, wobei eine häufig angewandte Methode darin besteht, das Foto eines gestohlenen oder gefundenen Ausweises durch das Foto einer anderen Person zu ersetzen. Dies ist bei den meisten normalen Ausweiskarten ohne großen Aufwand möglich. Auch bei den oben beschriebenen Ausweiskarten, bei denen die entsprechenden Informationen mit Hilfe eines Laserstrahls auf das Karteninlett aufgezeichnet worden sind und die als zusätzliches Sicherheitsmerkmal ein beim Aufzeichnungsvorgang erzeugtes deckungsgleiches Relief aufweisen, sind Eindruckfälschungen von echten karten nicht ohne weiteres zu unterscheiden. Es besteht daher nach wir vor ein Bedürfnis dafür, Fälschungen auch dieser Art zu verhindern.

Die Aufgabe der vorliegenden Erfindung besteht somit darin, bei kartenförmigen Datenträgern der eingangs angegebenen Gattung die Fälschungssicherheit noch weiter zu steigern.

Diese Aufgabe wird nun gelöst durch die kennzeichnenden Merkmale des kartenförmigen Datenträgers gemäß Hauptanspruchs 1.

Gegenstand der Erfindung ist daher ein kartenförmiger, ein Relief tragender Datenträger mit einem Substrat und mindestens einer transparenten Deckfolie, welches Substrat unter Anwendung eines Laserstrahls durch die Deckfolie hindurch mit durch die Deckfolie hindurch erkennbaren Informationen versehen ist, der dadurch gekennzeichnet ist, daß die transparente Deckfolie das den Informationsbereich zumindest teilweise überlappende, vor dem Aufzeichnen der Information aufgebrachte Relief trägt, welches eine optische Linsenwirkung aufweist und damit die unter Anwendung des Laserstrahles einzuschreibende Information charakteristisch modifiziert.

Die Unteransprüche betreffen bevorzugte Ausführungsformen des Erfindungsgegenstands.

Gegenstand der Erfindung ist weiterhin ein Verfahren zur Herstellung des erfindungsgemäßen Datenträgers, das dadurch gekennzeichnet ist, daß man eine mit dem Relief, welches eine optische Linsenwirkung aufweist, versehene transparente Deckfolie unter Verwendung einer durch Gravieren mit einem negativen Reliefmuster versehene Kaschierplatte auf das Substrat aufkaschiert oder nach dem Aufkaschieren einer planen Deckfolie diese durch Prägen mit dem Relief mit der optischen Linsenwirkung versieht und anschließend durch die Deckfolie hindurch zumindest teilweise im Bereich unterhalb des Reliefs die Informationen mit Hilfe eines Laserstrahls auf das Substrat aufzeichnet.

Erfindungsgemäß werden die oben angesprochenen Fälschungsversuche dadurch verhindert, daß an einer geeigneten Stelle, namentlich in dem Bereich der Karte, in dem später wesentliche Informationen, beispielsweise eine Fotografie des Karteninhabers, mit Hilfe eines Laserstrals aufgezeichnnet werden sollen, ein Relief auf die transparente Deckfolie und damit auf die Kartenoberfläche aufgebracht ist. Dieses Relief liegt vorzugsweise in Form eines erhabenen Linien- oder Punktmusters vor, namentlich in Form von konvexen Linien oder Punkten, die damit auf der Oberfläche der Deckfolie des kartenförmigen Datenträgers ein optisches Linsensystem bilden, welches bei der späteren Aufzeichnung der Informationen mit Hilfe eines Laser-strahls durch die in dieser Weise mit dem Relief versahene Deckfolie hindurch eine Modifizierung des die Substratoberfläche verändernden Laserstrahls bewirken und damit eine charakteristische Veränderung der Informationen verursachen. Namentlich dann, wenn dieses Relief in Form eines erhabenen konvexen Linienmusters aufgebracht wird, ergibt sich beim Aufzeichnen der Informationen mit Hilfe des Laserstrahls, namentlich bei der Aufzeichnung des Fotos des Kärteninhabers - ohne daß hierfür ein separater Arbeitsgang notwendig wäre - eine intensive Schwärzung im Bereich des Reliefs, die von benachbarten helleren Bereichen umgeben ist, ein Sachverhalt, der nachfolgend noch näher erläutert werden wird.

Diese Modifizierung der mit Hilfe des Laserstrahls auf das Substrat aufgezeichneten Informationen bleibt auch dann sichtbar, wenn beispielsweise das ursprünglich vorhandene Relief abgetragen und/oder durch ein anderes ersetzt wird, so daß ein solcher Fälschungsvorgang ohne weiteres festgestellt werden kann. Darüber hinaus läßt sich diese Modifizierung der mit Hilfe des Laserstrahls auf das Substrats aufgezeichneten Informationen im nachhinein nich durchführen, da in diesem Fall die bereits zuvor geschwärzten Bereiche ja nicht mehr beseitigt werden können. Insofern stellt die vorliegende Lahre eine erheb liche Verbesserung der Fälschungssicherheit und damit einen beträchtlichen Fortschritt dar.

Das erfindungsgemäß auf der transparenten Deckfolie angeordnete Relief kann mit Vorteil in Form eines erhabenen konvexen Linien- oder Punktmusters vorliegen, welches flächendeckend oder auch nicht-flächendeckend sein kann. Flächendeckende Zylinderlinienmuster dieser Art sind beispielsweise aus Postkarten mit Stereobildeffekt oder mit Doppelbildeffekt bekannt. Allerdings liegt hier eine ganz andersartige Technik vor, indem nämlich das Zylinderlinienmuster lediglich das getrennte Betrachten zweier auf der gleichen Fläche vorliegenden Bilder ermöglichen soll, jedoch in keiner Weise dazu herangezogen wird, die Bildinformationen in charakteristischer Weise zu modifizieren und sie dadurch vor etwaigen Fälschungen zu schützen.

Eine besonders bevorzugte Ausführungsform der Erfindung besteht darin, das flächendeckende Linien- oder Punktmuster in Form von Zeilen, konzentrischen Kreisen, einer flächenhaften Schrift und/oder eines flächenhaften Logos vorzusehen, beispielsweise in Form von Guilloche-Mustern, wie sie auf Banknoten oder Scheckkarten zu finden sind. Noch stärker bevorzugt ist es allerdings, dieses Relief in Form eines nichtflächendeckenden Linien- oder Punktmusters vorzusehen, namentlich in Form von Schriftzeichen, eines Monogramms, eines begrenzten Guilloche-Musters, eines Stempels, eines Hoheitszeichens und/oder eines linienförmigen Logos, welches derart angeordnet wird, daß es sich zum Teil mit dem mit Hilfe des Laserstrahls aufgezeichneten Foto des Karteninhabers überlappt, wie es bei den heute üblichen Personalausweisen oder Reisepässen mit Hilfe von Stempelfarbe oder durch Hochprägung auf dem Paßfoto angewandt wird. Wenn nun dieses Foto mit Hilfe des Laserstrahls durch das aufgebrachte Relief auf das Substrat des kartenförmigen Datenträgers aufgezeichnet wird, ergibt sich durch die Linsenwirkung des konvexen Linienoder Punktmusters eine Modifizierung der das Foto bildenden Rasterpunkte, wodurch eine weitgehend fälsrhungssichere Ausweiskarte erhalten wird, die wegen der charakteristischen Modifizierung des aufgezeichneten Bildmusters weder nachträglich erzeugt noch nachträglich modifiziert werden kann.

Zur Erläuterung dieses Sachverhalts sei die Erfindung im folgenden näher unter Bezugnahme auf die beigefügten Zeichnungen erläutert. In den Zeichnungen zeigen

Fig. 1 eine vergrößert dargestellte Teilschnittansicht einer Ausführungsform des erfindungsgemäßen kartenförmigen Datenträgers,

Fig. 2 eine den erfindungsgemäß erreichten Informations-Modifizierungs - Effekt verdeutlichende Schemazeichnung,

Fig. 3 eine Kurvendarstellung, die die mit Hilfe der in der Fig. 2 dargestellten Ausführungsform erzeugte Schwärzungskurve wiedergibt, und

Fig. 4 eine Schemazeichnung, welche den Effekt der Modifizierung der aufgezeichneten Informationen beim Betrachten verdeutlicht.

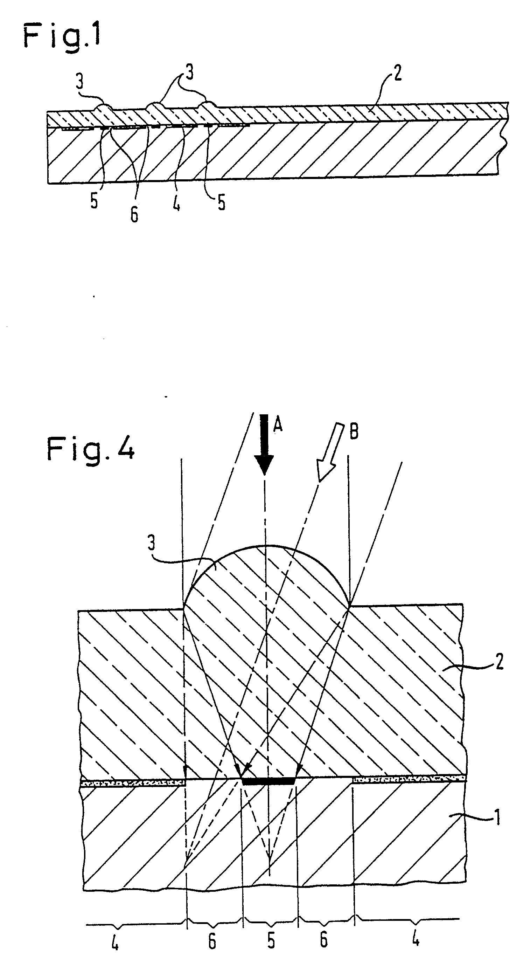

Wie in der Fig. 1 dargestellt ist, umfaßt der erfindungsgemäße kartenförmige Datenträger ein Substrat 1 aus einem Material mit hoher Absorption für die verwendete Laserstrahlung und kann beispielsweise aus einem lichtundurchlässigen Material, wie Papier, füllstoffhaltigem Kunststoff und dergleichen oder aber auch aus einem transparenten Material bestehen, welches die angesprochene Absorption besitzt. Auf seiner Oberfläche trägt das Substrat 1 eine transparente Deckfolie 2, beispielsweise in Form einer aufkaschierten Klarsichtfolie aus Polyvinylchlorid oder aus Polyester. Gegebenenfalls kann auch die Rückseite des Substrats mit einer solchen transparenten Deckfolie versehen sein.

Auf der Oberseite der Deckfolie 2 ist ein Relief 3 aufgebracht, welches, wie aus der dargestellten Ansicht zu erkennen ist, in Form von drei Zylinderlinsen vorliegt.

Auf dem Substrat 1 bzw. an der Grenzfläche zwischen Substrat 1 und Deckfolie 2 sind mit Hilfe eines Laserstrahls durch die transparente Deckfolie 2 und das darauf vorliegende Relief 3 hindurch Informationen aufgezeichnet worden, die in der Fig. 1 mit den Bezugsziffern 4, 5 und 6 bezeichnet sind.

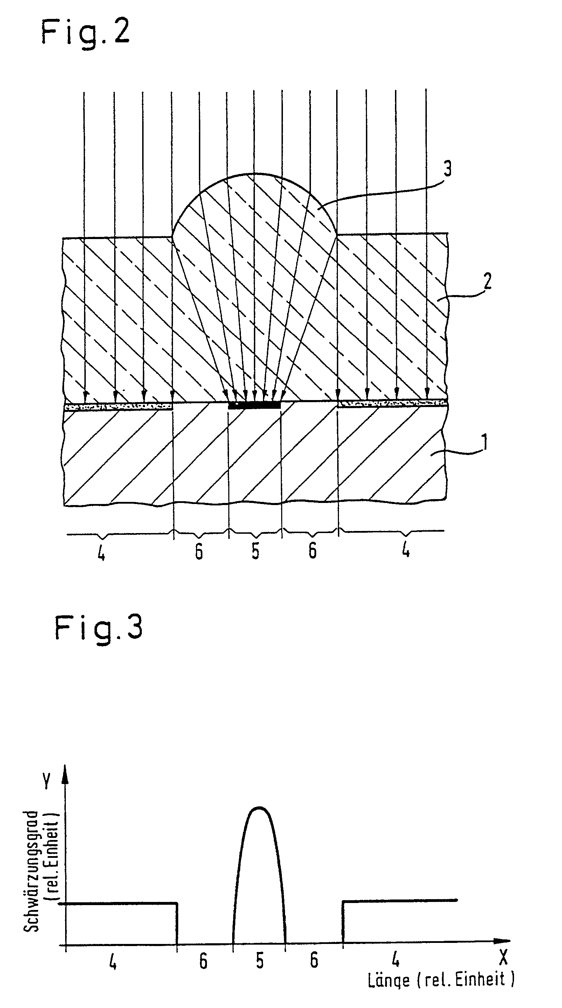

Dieser Sachverhalt wird in der Fig. 2 in einem noch größeren Maßstab dargestellt, wobei die senkrecht von oben nach unten verlaufenden Pfeile die eingestrahlte Laserstrahlung wiedergeben sollen. Die Laserstrahlen werden, wie in der Fig. 2 schematisch dargestellt ist, durch die optische Linsenwirkung des Reliefs 3 gebrochen und im Bereich 5 gesammelt. In den Bereichen 6 trifft keine Laserstrahlung auf die Grenzfläche zwischen Substrat 1 und transparente Deckfolie 2. In jenen Bereichen, wo kein Relief 3 vorliegt, erfolgt auch keine Bündelung der Laserstrahlen, so daß hier eine etwas geringere Schwärzung des Substratmaterials bzw. des an der Grenzfläche zwischen Substrat und Deckfolie vorliegenden, lichtempfindlichen Materials erfolgt. In der Fig. 3 ist der mit Hilfe dieser Anordnung erzielte Schwärzungseffekt wiedergegeben, wobei auf der X-Achse der Abstand in relativen Längeneinheiten und auf der Y-Achse die Schwärzungsintensität ebenfalls in relativen Einheiten wiedergegeben ist. Es ist erkennbar, daß in dem Bereich 5 eine besonders starke Schwärzung erfolgt, während in den Bereichen 4 eine normale Schwärzung und in den Bereichen 6 keine Schwärzung erreicht wird, trotz der Tatsache, daß dieser Bereich des kartenförmigen Datenträgers gleichmäßig mit der Laserstrahlung beaufschlagt wird, wie es aus der Fig. 2 abzulesen ist.

Wie namentlich aus der Fig. 3 hervorgeht, erfolgt damit eine charakteristische Modifizierung und Veränderung der aufgezeichneten Informationsdichte, die ausschließlich durch das auf der Deckfolie 2 vorliegende Relief 3 bedingt ist. Selbst nach Beseitigung oder Veränderung des Reliefs 3 auf der Oberfläche der Deckfolie bleibt diese charakteristische Modifizierung der aufgezeichneten Informationen bestehen, so daß hier eine weitgehende Fälschungssicherheit erreicht wird. Darüber hinaus läßt sich anhand der Fig. 4 erkennen, daß bei der Betrachtung des in dieser Weise beschrifteten kartenförmigen Datenträgers sich jeweils unterschiedliche Bilderscheinungen ergeben, die von der gewählten Betrachtungsrichtung, abhängen, d.h. dem Winkel zwischen der Oberfläche des kartenförmigen Datenträgers und der Beobachtungsrichtung. Während sich bei einer Betrachtung unter einem Winkel von 90° entsprechend dem schwarz gezeigten Pfeil A das Relief als schwarz darstellt, erscheint das Relief bei einem davon abweichenden Beobachtungswinkel heller oder auch weiß,dann nämlich, wenn der Beobachtungswinkel beispielsweise 70° beträgt (Pfeil B), wo Über den optischen Linseneffekt des Reliefs 3 der unveränderte Bereich 6 in das Beobachtungsfeld rückt. Dieser Effekt hängt vom Brechungsindex der transparenten Deckfolie 2, dem Krümmungsradius des Reliefs 3 und der Dicke der transparenten Deckfolie 2 ab und läßt sich ohne weiteres anhand der Abbildungsgesetze der linearen Optik erklären. Damit läßt sich erfindungsgemäß entweder die Intensität der Strahlung an der Grenzfläche zwischen der transparenten Deckfolie 2 und dem Substrat 1 oder die örtliche Trennung der hellen und dunklen Zonen durch entsprechende Wahl der Dicke der transparenten Deckfolie 2 in bestimmten Grenzen gezielt einstellen.

Bei der praktischen Anwendung dieses Effekts, beispielsweise auf die in Rede stehenden kartenförmigen Datenträger, deren Informationen mittels eines Hochleistungslasers in die Karte eingebracht werden, tritt aufgrund der speziellen Wechselwirkung mit dem Kartenmaterial eine in die Tiefe gehende Veränderung (Schwärzung) auf der transparenten Deckschicht auf, die den beschriebenen Effekt allerdings nicht oder nur unwesentlich beeinflußt. Grundsätzlich läßt sich jedoch durch geeignete Wahl der Zusammensetzung der einzelnen Schichten diese Tiefe der Schwärzung in jeder gewünschten Richtung gezielt beeinflussen.

Der oben beschriebene erfindungsgemäße Effekt kann auch mit kartenförmigen Datenträgern aus einem transparenten einschichtigen oder mehrschichtigen Material erreicht werden, welches die für die Aufzeichnung der Informationen angewandte Laserstrahlung in ausreichendem'Umfang zu absorbieren vermag und in der Weise aufgebaut ist, daß die durch die Laserstrahlung verursachte Schwärzung innerhalb des transparenten Materials vorliegt. Auch in diesem Fall ergibt sich der durch das erfindungsgemäß vorgesehene Relief auf der Deckseite des kartenförmigen Datenträgers erzeugte Effekt der charakteristischen Modifizierung der mit Hilfe des Laserstrahls aufgezeichneten Informationen.

Die vorliegende Erfindung ermöglicht somit durch das Vorsehen des erhabenen Reliefs 3 auf der Deckfolie 2 oder einem insgesamt transparenten Datenträger eine charakteristische Modifizierung der durch dieses Relief hindurch aufgezeichneten Informationen, die zur Folge haben, daß diese Informationen aufgrund der unterschiedlichen Schwärzung bzw. Nichtschwärzung bei seitlicher Betrachtung verschwinden, ein Effekt, der durch nachträgliche Modifizierung der Karte nicht erreicht werden kann.

Ein weiterer Gegenstand der Erfindung ist ein Verfahren zur Herstellung des oben bezeichneten kartenförmigen Datenträgers gemäß Patentanspruch 1, welches darin besteht, daß man für das Aufkaschieren der transparenten Deckfolie (2) auf das Substrat (1) eine durch Gravieren mit dem gewünschten Reliefmuster versehene Kaschierplatte verwendet oder daß man nach dem Aufkaschieren einer planen Deckfolie diese durch Prägen mit dem Relief (3) versieht und anschließend die Informationen mit Hilfe eines Laserstrahls durch die Deckfolie hindurch zumindest teilweise im Bereich unterhalb des Reliefs die Informationen auf das Substrat (1) aufzeichnet. Die Methode der Aufzeichnung der Informationen mit Hilfe eines Laserstrahls ist beispielsweise aus der oben bereits angesprochenen DE-PS 29 07 004 bekannt.

## Ansprüche

1. Kartenförmiger, ein Relief tragender Datenträger mit einem Substrat und mindestens einer transparenten Deckfolie, welches Substrat unter Anwendung eines Laserstrahls durch die Deckfolie hindurch mit durch die Deckfolie hindurch erkennbaren Informationen versehen ist, **dadurch gekennzeichnet,** daß die transparente Deckfolie (2) das den Informationsbereich zumindest teilweise überlappende, vor dem Aufzeichnen der Information aufgebrachte Relief (3) trägt, welches eine optische Linsenwirkung aufweist und damit die unter Anwendung des Laserstrahles einzuschreibende Information charakteristisch modifiziert.

2. Kartenförmiger Datenträger nach Anspruch 1, **dadurch gekennzeichnet,** daß das Relief (3) in Form eines erhabenen Linien- oder Punktmusters vorliegt.

3. Kkartenförmiger Datenträger nach Anspruch 2, **dadurch gekennzeichnet,** daß das Relief (3) in Form eines erhabenen konvexen linien- oder Punktmusters vorliegt.

4. Kartenförmiger Datenträger nach Anspruch 3, **dadurch gekennzeichnet,** daß das Relief (3) in Form von Zylinderlinsen vorliegt.

5. kartenförmiger Datenträger nach mindestens einem der vorhergehenden Ansprüche, **dadurch gekennzeichnet,** daß die Zylinderlinsen in Form eines flächendeckenden Linienmusters vorliegen.

6. Kartenförmiger Datenträger nach mindestens einem der vorhergehenden Ansprüche, **dadurch gekennzeichnet,** daß das flächendeckende linien- oder Punktmuster in Form von Zeilen, konzentrischen kreisen, einer flächenhaften Schrift und/oder eines flächenhaften Logos vorliegt.

7. Kartenförmiger Datenträger nach mindestens einem der vorhergehenden Ansprüche, **dadurch gekennzeichnet,** daß das Relief (3) in Form eines nicht-flächendeckenden linien- oder Punktmusters vorliegt.

8. Kartenförmiger Datenträger nach Anspruch 7, **dadurch gekennzeichnet,** daß das Relief (3) in Form von Schriftzeichen, eines Monogramms, einer Guilloche, eines Stempels, eines Hoheitszeichens oder eines linienförmigen Logos vorliegt.

9. Kartenförmiger Datenträger nach mindestens einem der vorhergehenden Ansprüche, **dadurch gekennzeichnet,** daß die Informationen durch Interferenzerscheinungen zwischen dem Linien- oder Punktmuster des Reliefs (3) und dem Raster der Informationsaufzeichnung charakteristisch verändert sind.

10. Verfahren zur Herstellung des kartenförmigen Datenträgers nach den vorhergehenden Ansprüchen, **dadurch gekennzeichnet,** daß man eine mit dem Relief (3), welches eine optische Linsenwirkung aufweist, versehene transparente Deckfolie (2) unter Verwendung einer durch Gravieren mit einem negativen Reliefmuster versehene Kaschierplatte auf das Substrat (1) aufkaschiert oder nach dem Aufkaschieren einer planen Deckfolie diese durch Prägen mit dem Relief (3) mit der optischen Linsenwirkung versieht und anschließend durch die Deckfolie hindurch zumindest teilweise im Bereich unterhalb des Reliefs die Informationen mit Hilfe eines Laserstrahls auf das Substrat (1) aufzeichnet.

## Claims

1. Card-shaped data carrier bearing a relief with a substrate and at least one transparent covering film, the substrate being provided with information readable through the covering film by means of a laser beam which passes through the covering film, **characterised in that** the transparent covering film (2) bears the relief (3), which overlaps the information area at least partially and is applied before the information is recorded, this relief producing an optical lens effect and thus characteristically modifying the information that is to be recorded by means of the laser beam.

2. Card-shaped data carrier according to Claim 1, **characterised in that** the relief (3) is in the form of a raised pattern of lines or dots.

3. Card-shaped data carrier according to Claim 2, **characterised in that** the relief (3) is in the form of a raised pattern of convex lines or dots.

4. Card-shaped data carrier according to Claim 3, **characterised in that** the relief (3) is in the form of cylindrical lenses.

5. Card-shaped data carrier according to at least one of the foregoing Claims, **characterised in that** the cylindrical lenses are in the form of a pattern of lines covering the surface.

6. Card-shaped data carrier according to at least one of the foregoing Claims, **characterised in that** the pattern of lines or dots covering the surface is in the form of lines, concentric circles, two-dimensional lettering and/or a two-dimensional logo.

7. Card-shaped data carrier according to at least one of the foregoing Claims, **characterised in that** the relief (3) is in the form of a pattern of lines or dots which does not cover the surface.

8. Card-shaped data carrier according to Claim 7, **characterised in that** the relief (3) is in the form of letters, a monogram, an engine-turned pattern, a stamp, a national emblem or a logo made up of lines.

9. Card-shaped data carrier according to at least one of the foregoing Claims, **characterised in that** the information is characteristically modified by interference phenomena between the pattern of lines or dots of the relief (3) and the grid of the information recording.

10. Method for the manufacture of the card-shaped data carrier according to the foregoing claims, **characterised in that** a transparent covering film (2) provided with the relief (3) which has an optical lens effect is bonded on to the substrate (1) with the aid of a lining sheet provided with a negative relief pattern produced by engraving, or else after a flat covering film has been bonded on, it is provided with the relief (3) with the optical lens effect by embossing, after which the information is recorded through the covering film onto the substrate (1) at least partially in the area underneath the relief by means of a laser beam.

**Revendications**

1. Support de données en forme de carte portant un relief, comprenant un substrat et au moins une feuille de recouvrement transparente, lequel substrat est pourvu, à l'aide d'un rayon laser traversant la feuille de recouvrement, d'informations identifiables à travers la feuille de recouvrement, caractérisé en ce que la feuille de recouvrement transparente (2) porte le relief (3), qui recouvre au moins partiellement la zone d'informations et est appliqué avant l'enregistrement des informations, lequel relief a une action de lentille optique, modifiant ainsi d'une manière caractéristique les informations enregistrées par le rayon laser.

2. Support de données en forme de carte selon la revendication 1, caractérisé en ce que le relief (3) se présente sous forme d'un dessin de lignes ou de points en relief.

3. Support de données en forme de carte selon la revendication 2, caractérisé en ce que le relief (3) se présente sous forme d'un dessin de lignes ou de points convexe en relief.

4. Support de données en forme de carte selon la revendication 3, caractérisé en ce que le relief (3) se présente sous forme de lentilles cylindriques.

5. Support de données en forme de carte selon au moins une des revendications précédentes, caractérisé en ce que les lentilles cylindriques se présentent sous forme d'un dessin de lignes couvrant la surface.

6. Support de données en forme de carte selon au moins une des revendications précédentes, caractérisé en ce que la dessin de lignes ou de points couvrant la surface se présente sous forme de lignes, de cercles concentriques, d'un texte adhérant à la surface et/ou d'un logotype adhérant à la surface.

7. Support de données en forme de carte selon au moins une des revendications précédentes, caractérisé en ce que le relief (3) se présente sous forme d'un dessin de lignes ou de points ne couvrant pas la surface.

8. Support de données en forme de carte selon la revendication 7, caractérisé en ce que le relief (3) se présente sous forme de caractères, d'un monogramme, d'une guilloche, d'un cachet, d'un emblème ou d'un logotype en forme de lignes.

9. Support de données en forme de carte selon au moins une des revendications précédentes, caractérisé en ce que les informations sont modifiées de manière caractéristique par des phénomènes d'interférence entre le dessin de lignes ou de points du relief (3) et la trame des informations enregistrées.

10. Procédé de fabrication du support de données en forme de carte selon les revendications précédentes, caractérisé en ce qu'à l'aide d'une plaque de contrecollage munie par gravage d'un dessin de relief négatif, on contrecolle sur le substrat (1) une feuille de recouvrement transparente (2) munie du relief (3) à action de lentille optique, ou en ce qu'à la suite du contrecollage d'une feuille de recouvrement plane, cette dernière est pourvue par estampage du relief (3) à action de lentille optique, puis, à l'aide d'un rayon laser, on enregistre les informations sur le substrat (1) en traversant la feuille de recouvrement, au moins en partie dans la zone située en dessous du relief.

Fig.1
3
3
2
5
6
4
5

Fig. 4
A
B
3
2
1
4
6
5
6
4

Fig. 2

3
2
1
4
6
5
6
4

Fig. 3

Y
Schwärzungsgrad (rel. Einheit)
4
6
5
6
4
X
Länge (rel. Einheit)